# FASCICULE DE BREVET EUROPEEN

(11) **EP 3 044 189 B1**
(45) Date de publication et mention de la délivrance du brevet: **27.10.2021**
(21) Numéro de dépôt: 14793201.6
(22) Date de dépôt: 08.09.2014
(51) Int. Cl.: C05F 3/00, C05F 3/06, C05F 5/00, C05F 7/00, C05F 9/00

(54) **PROCÉDÉ DE PRÉSERVATION DU POTENTIEL FERMENTESCIBLE D'UN SUBSTRAT ORGANIQUE ET INSTALLATION CORRESPONDANTE**
VERFAHREN ZUR BEWAHRUNG DES FERMENTIERBAREN POTENZIALS EINES ORGANISCHEN SUBSTRATS UND ZUGEHÖRIGE ANLAGE
METHOD FOR PRESERVING THE FERMENTABLE POTENTIAL OF AN ORGANIC SUBSTRATE AND CORRESPONDING FACILITY

(30) Priorité: 11.09.2013 FR 1302119
(43) Date de publication de la demande: 20.07.2016
(73) Titulaire: Afyren, 63360 Saint-Beauzire (FR)
(72) Inventeur: NOUAILLE, Régis, F-63800 Cournon d'Auvergne (FR); PESSIOT, Jérémy, F-63000 Clermont-Ferrand (FR)
(74) Mandataire: Dennemeyer & Associates S.A.
(86) Numéro de dépôt international: PCT/FR2014/052220
(87) Numéro de publication internationale: WO 2015/036683

(56) Documents cités:
- EP-A1- 0 796 832
- WO-A1-2006/075920
- WO-A1-2009/093926
- WO-A1-2011/120035
- AT-B- 394 995
- DE-A1- 4 131 101
- DE-A1-102007 051 660
- GB-A- 2 011 597
- US-A- 3 897 215
- US-A1- 2006 273 048
- D R Gajurel ET AL: "Pre-treatment of domestic wastewater with pre-composting tanks: evaluation of existing systems", Water science and technology : a journal of the International Association on Water Pollution Research, 1 janvier 2003 (2003-01-01), page 133, XP055117378, England Extrait de l'Internet: URL:http://www.ncbi.nlm.nih.gov/pubmed/147 53528 [extrait le 2014-05-15]

## Description

La présente invention concerne un procédé de préservation du potentiel fermentescible d'un substrat organique ainsi qu'une installation correspondante.

Par substrat organique, on désigne ici des déchets, sous-produits et coproduits formés de matières organiques, c'est-à-dire de la biomasse. Par la suite, le terme substrat sera préférentiellement utilisé.

La valorisation de tels substrats organiques issus des activités humaines, qu'elles soient domestiques, industrielles, agricoles ou agro-industrielles, peut être mise en oeuvre par des procédés de fermentation. Selon la finalité de la fermentation, on favorise la production de divers métabolites, par exemple du méthane, de l'hydrogène, des acides gras volatils, des alcools ou autres. On connait des procédés de traitement des déchets organiques en vue de produire différents métabolites, par exemple ceux décrits par EP-A-796 832, WO-A-2009/093 926, WO-A-2011/120 035 dans lesquels un traitement thermique préalable de la matière organique est réalisé, visant à pasteuriser ou à stériliser la matière organique afin de contrôler les paramètres de fermentation.

Le potentiel fermentescible est un paramètre utilisé comme étant un indicateur de l'efficacité d'une fermentation d'une biomasse donnée à produire des métabolites, quelle que soit la voie fermentaire mise en jeu.

Il s'avère que le potentiel fermentescible évolue rapidement avec le temps pour du substrat frais n'ayant subi aucun traitement. En d'autres termes, en absence de traitement, la capacité d'un substrat organique à produire des métabolites diminue rapidement dans le temps. Ceci implique que le substrat frais, relativement humide en général et cela de quelle que nature qu'il soit, doit être utilisé rapidement. Typiquement, l'utilisation intervient dans les sept à quinze jours suivant la collecte, cela que la fermentation soit réalisée en phase solide ou en phase liquide, afin de préserver un rendement optimal de la production de métabolites par fermentation.

Or, dans le cadre d'un procédé de fermentation industriel, il est important, pour garantir la productivité de l'installation, d'avoir un substrat dont le potentiel fermentescible est, non seulement, aussi élevé que possible mais surtout régulier et maitrisé. Ce point est d'autant plus important que les substrats utilisés dans un procédé de fermentation industriel sont principalement d'origine agricole, industrielle, domestique et/ou agro-alimentaire afin de garantir des volumes importants. De ce fait, on observe une variabilité, qualitative et quantitative, du substrat par exemple en fonction de la saison. A titre illustratif, lorsque les animaux d'élevage, tels que des bovins, ovins ou caprins, sont en pâturage extérieur, typiquement pendant la belle saison, la production de fumier et de lisier est minimale. De même, les déchets verts (tontes, feuilles..) sont quasiment inexistants pendant l'hiver. En d'autres termes, il est difficile d'obtenir un volume continu et régulier en un substrat dont la composition et le potentiel fermentescible sont maitrisés tout au long de l'année. En effet, il est généralement admis que le stockage du substrat ne permet pas de maintenir à des valeurs souhaitées le potentiel fermentescible du substrat. En d'autres termes, il est admis qu'une utilisation rapide du substrat est nécessaire pour préserver un potentiel fermentescible optimal.

L'invention vise plus particulièrement à remédier à ces inconvénients en proposant un procédé permettant de maintenir à une valeur déterminée, proche de celle d'un substrat frais, le potentiel fermentescible d'un substrat, quelles que soient sa composition et/ou la date de collecte.

A cet effet, l'invention a pour objet un Procédé de préservation dans le temps du potentiel fermentescible initial de biomasse, comportant une phase solide avec de l'eau formant une phase solide, utilisée comme substrat organique dans une production de métabolites par fermentation, ledit potentiel étant représenté par le potentiel méthanogène de la biomasse, ou BMP, de la biomasse, comportant des étapes consistant à
a) déterminer le taux d'humidité (HM) de la biomasse collectée,
caractérisé en ce qu'il comprend au moins les étapes suivantes :
- b) comparer le taux d'humidité déterminé (HM) à un taux d'humidité prédéterminé (HD) et compris entre 8% et 12%,
- c) amener par déshydratation thermique, ou chauffage, à 60°C le taux d'humidité déterminé (HM) à une valeur correspondant au taux d'humidité prédéterminé (HD) lorsque le taux d'humidité déterminé (HM) est supérieur au taux d'humidité prédéterminé (HD),
- d) stocker seulement la biomasse dont le taux d'humidité (HM), déterminé à l'étape a) ou obtenu à l'issue de l'étape c), correspond au taux d'humidité prédéterminé (HD).

En déterminant le taux d'humidité du substrat et en ne stockant que celui dont le taux d'humidité correspond à un taux d'humidité prédéterminé, on préserve, contre toute attente, le potentiel fermentescible du substrat, ce dernier étant, de facto, partiellement sec. L'utilisation d'un substrat ainsi partiellement déshydraté peut se faire plus ou moins rapidement. Il est ainsi possible de stocker le substrat de manière à lisser dans le temps la quantité de substrat disponible, assurant ainsi une régularité de production de métabolites.

Selon des aspects avantageux mais non obligatoires de l'invention, un tel procédé peut comprendre une ou plusieurs des caractéristiques suivantes:
- On effectue, lors des étapes a) et d) des mesures du potentiel méthanogène de la biomasse.
- On adapte les conditions de stockage pour maintenir le taux d'humidité (HM) du substrat organique collecté à une valeur égale, à plus ou moins 5%, à celle du taux d'humidité prédéterminé (HD).
- Lors de l'étape d), en cours de stockage, on effectue, par exemple régulièrement, les étapes a) et b).
- Avant l'étape a), on effectue un égouttage du substrat organique lors d'une étape supplémentaire e).
- Lors de l'étape a), la détermination du taux d'humidité (HM) est réalisée par une mesure effectuée sur un échantillon représentatif du substrat organique collecté.
- Lors de l'étape a), la détermination du taux d'humidité (HM) est réalisée visuellement sur le substrat organique collecté.

L'invention sera mieux comprise et d'autres avantages de celle-ci apparaitront plus clairement à la lecture de la description de plusieurs modes de réalisation de l'invention, donnée à titre d'exemple non limitatif et faite en référence aux dessins suivants dans lesquels:
- La figure 1 est un schéma simplifié représentatif du procédé objet de l'invention et
- les figures 2 et 3 sont des schémas simplifiés représentatifs de deux installations de mises en œuvre du procédé selon deux modes de réalisation.

L'une des fermentations mises en oeuvre est la méthanisation, c'est-à-dire la production de méthane par un procédé fermentatif anaérobie comprenant quatre étapes, interconnectées : une première étape concerne l'hydrolyse des molécules complexes présentes dans le substrat par des micro-organismes. Une seconde étape, impliquant des micro-organismes acidogènes, permet de transformer les monomères issus de l'hydrolyse en acides gras volatils, en alcools, en acides organiques, en hydrogène et en gaz carbonique. Des micro-organismes interviennent respectivement dans l'étape de formation des précurseurs du méthane, de l'acétate et de l'hydrogène dans une étape d'acétogénèse. Une dernière étape est la production de méthane par action d'archaebactéries.

En fonction du substrat initial, donc de la biomasse constitutive des déchets organiques, les caractéristiques des différentes étapes de la méthanisation évoluent, étant entendu que les groupes de micro-organismes agissent de façon simultanée. Ces caractéristiques vont déterminer la capacité d'un substrat à produire du méthane : on détermine ainsi, de manière connue, le potentiel méthanogène de la biomasse, couramment désigné par l'acronyme en langue anglaise BMP (Biochemical Methane Potential).

Ce potentiel illustre non seulement la capacité de la biomasse à produire du méthane mais constitue également un paramètre représentatif de la capacité du substrat à produire d'autres métabolites par fermentation. Le potentiel méthanogène peut donc être utilisé, comme d'autres paramètres, comme un indicateur du potentiel fermentescible du substrat. De ce fait, la demanderesse a retenu la mesure du BMP comme étant une mesure représentative du potentiel fermentescible général d'un substrat étant entendu qu'il est possible d'utiliser d'autres paramètres pour suivre l'évolution du potentiel fermentescible lors de la mise en oeuvre de l'invention.

La demanderesse a constaté, de manière surprenante, que le potentiel fermentescible est préservé lorsque l'activité des micro-organismes est ralentie, c'est-à-dire limitée, notamment du fait d'une teneur en eau du substrat 2, donc d'un taux d'humidité HM, compris entre 0% et 40%, avantageusement entre 5% et 25%, et préférentiellement entre 8% et 12%. Un tel taux d'humidité prédéterminé HD, est généralement inférieur à la teneur en eau initiale donc au taux d'humidité déterminée HM du substrat 2 frais.

Il est admis qu'il convient d'utiliser le plus rapidement possible le substrat, avec un taux d'humidité HM le plus proche possible d'un taux d'humidité, défini et connu en soi, selon le procédé de fermentation retenu, et qui est généralement supérieur à 40%, pour obtenir un potentiel fermentescible optimal. En d'autres termes, un taux d'humidité compris entre 0% et 40% est considéré, dans l'état de la technique, comme trop bas pour permettre un déroulement optimal d'un procédé de fermentation. Des essais effectués avec deux types de fumier de bovins, du lisier de bovins et de la fiente de volailles ont donné les valeurs suivantes du BMP, exprimées en une unité connue en soi, à savoir en Nm3/T de matière brute:

| | | |
|---|---|---|
| Fumier 1, frais: 50. | Fumier 1, 3 mois de stockage : 12. | Fumier 1, 1 an de stockage : 8. |
| Fumier 2, frais: 54. | Fumier 2, 3 mois de stockage : 14. | Fumier 2, 1 an de stockage : 8. |
| Lisier, frais : 13,5. | Lisier, 3 mois de stockage : 4. | |
| Fiente, frais : 51. | Fiente, 3 mois de stockage : 14. | |

Des essais effectués sur les mêmes substrats 2 et pour les mêmes durées de stockage que précédemment ont été effectués. Un lot de substrat 2 a été déshydraté par chauffage à 105° C et un autre lot a été déshydratépar chauffage à 60°C. Dans les 2 cas, un taux d'humidité prédéterminé HD compris avantageusement entre 8% et 12%, en l'espèce voisin de 10%, est atteint en environ quatre heures lorsque le substrat 2 est chauffé à 105°C pour des fumiers et en environ vingt heures lorsque le substrat 2, à l'exception des lisiers, est chauffé à 60°C. Un taux d'humidité HM voisin de 0% est atteint en dix-huit heures avec un substrat 2 de type lisier chauffé à 105°C et en quarante-huit heures pour tous les substrats 2 de type lisier chauffés à 60°C, sachant que, pour les fumiers et fientes, le taux est atteint en un peu plus de vingt-quatre heures. En d'autres termes, et de façon logique, le taux d'humidité prédéterminé HD est atteint plus rapidement à hautes températures.

Après une déshydratation, jusqu'à un taux d'humidité de 10%, des substrats 2 chauffés à 60°C et à 105°C, la demandeesse a effectué des mesures du BMP après une période de stockage de trois mois et, pour certains substrats 2, d'un an. Ainsi, une comparaison, dans les mêmes conditions, du potentiel fermentescible des substrats est réalisée.

Les résultats de ces mesures de BMP, sont reproduits ci-après :

| | | |
|---|---|---|
| Fumier 1, 60°C : | 3 mois : 52,5 | un an : 42. |
| Fumier 1, 105°C: | 3 mois : 45,5 | un an : 39. |
| Fumier 2, 60°C : | 3 mois : 50 | un an : 41,5. |
| Fumier 2, 105°C: | 3 mois : 44 | un an : 39. |
| Fiente, 60°C: | 3 mois : 62. | |
| Fiente, 105°C : | 3 mois : 50. | |
| Lisier, 60°C : | 3 mois : 14. | |
| Lisier, 105°C : | 3 mois: 10,5. | |

On note, de manière surprenante, qu'un substrat 2, quel qu'il soit, chauffé à 60°C présente un BMP, donc un potentiel fermentescble, non seulement voisin du potentiel fermentescible initial indiqué dans le premier tableau, au bout de trois mois de stockage, mais dans tous les cas supérieur à celui du substrat chauffé à 105°C. Ici, le terme voisin doit être compris comme désignant autant une valeur légèrement inférieure que légèrement supérieure. De plus, le potentiel fermentescible du substrat 2 chauffé à 60°C est inférieur, au bout d'un an de stockage, de seulement environ 20% par rapport au potentiel fermentescible du substrat 2 frais.

Le substrat 2 chauffé à 105°C présente, de manière surprenante, un potentiel fermentescible inférieur à celui observé pour le substrat 2 chauffé à 60°C, cela pour toutes les durées de stockage. Néanmoins, les substrats 2, quelle que soit la température de déshydratation, typiquement pour une température comprise entre 50°C et 120°C ont un potentiel fermentescible supérieurà celui du substrat 2 n'ayant pas été déshydraté.

Il apparait donc qu'un chauffage modéré, pour déshydrater un substrat, est une solution optimale pour préserver un potentiel fermentescible élevé. En effet, il a été constaté qu'à une température de 105°C la phase dedémarrage, dans une fermentation méthanogène, est plus longue qu'à 60°C.

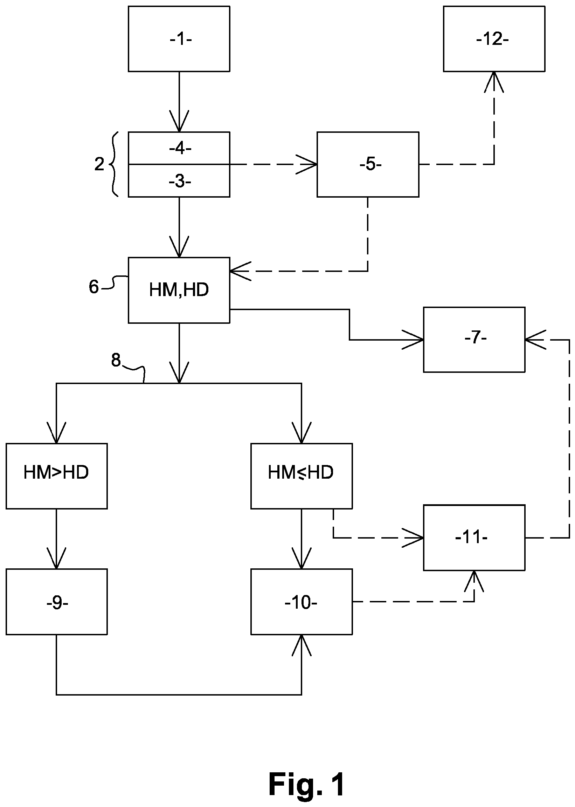

A partir de ces résultats, la demanderesse propose un procédé de préservation du potentiel fermentescible d'un substrat organique. Le procédé objet de l'invention est décrit en référence aux figures 1 à 3.

Une étape préalable à la mise en oeuvre du procédé objet de l'invention consiste à collecter 1 le substrat 2. Il s'agit essentiellement de matières organiques ou biomasses fermentescibles issues des sous-produits et coproduits domestiques ou agricoles, en particulier de l'élevage de mammifères tels que des bovins, ovins, caprins ou porcins ou de volailles. Les déchets provenant de l'industrie ou de l'agro-industrie, en particulier de l'industrie laitière, maraichère ou fruitière sont également collectés.

Ce substrat comprend une phase solide 3 et/ou une phase liquide 4. La nature et/ou l'origine du substrat 2 sont variables et connues en soi. Une étape optionnelle consiste, lorsque le substrat est peu chargé, c'est-à-dire lorsque le taux d'humidité est de plus de 80%, à effectuer un égouttage 5, de préférence naturel. Cet égouttage 5 a pour but d'évacuer le surplus de phase liquide. Il correspond, de facto, à une période de pré-stockage du substrat, préalablement à la mise en oeuvre du procédé.

Une première étape consiste, pour chaque arrivage de substrat 2 ou sur du substrat égoutté, à déterminer le taux d'humidité HM du substrat. Pour cela, une détermination visuelle est possible, en particulier lorsque le taux d'humidité HM est très faible ou, à l'inverse, très élevé. Dans un autre mode de réalisation, on prélève un échantillon 6 représentatif du substrat 2 et on détermine, par mesure sur l'échantillon, le taux d'humidité HM, donc le pourcentage de matière sèche, du substrat 2. L'échantillonnage et la méthode de mesure du taux d'humidité HM sont connus en soi. On conçoit que si le substrat 2 est utilisé immédiatement, typiquement dans les sept à quinze jours suivant la collecte, dans un procédé de fermentation 7, connu en soi, ou après une phase d'égouttage 5 si besoin, et éventuellement une fois le potentiel fermentescible déterminé, il n'est pas nécessaire de mettre en oeuvre les autres étapes du procédé.

En revanche, si le substrat 2 n'est pas utilisé rapidement, c'est-à-dire dans un délai de sept à quinze jours après la collecte 1, selon le taux d'humidité HM initial et les conditions de stockage, une perte du potentiel fermentescible, est observée. A titre d'exemple, des essais effectués sur du substrat 2 formé de fumiers et de lisiers de bovins ont montré, par le suivi du BMP, un potentiel fermentescible, pour certains substrats, divisé au moins par quatre au bout de trois mois de stockage sur une plateforme ou en champs, le substrat n'étant ni abrité ni couvert.

Une étape suivante 8 du procédé consiste à comparer le taux d'humidité déterminé HM au taux d'humidité prédéterminé HD précédemment et, en l'espèce, compris entre 8% et 12%. Dans tous les cas, ce taux d'humidité à atteindre HD est choisi comme correspondant à une valeur du BMP la plus proche possible de la valeur du BMP initial, sur substrat frais.

Si le taux d'humidité déterminé HM est supérieur au taux d'humidité prédéterminé HD, alors, lors d'une étape supplémentaire 9, on déshydrate le substrat 2 de sorte à abaisser le taux d'humidité HM d'une valeur définie, correspondant au taux d'humidité HD à atteindre. La valeur de cette déshydratation 9, c'est-à-dire l'écart entre le taux d'humidité initial HM, déterminé, et un taux d'humidité final HD, prédéterminé, est, d'une part, fonction du taux d'humidité initial et, d'autre part, fonction du taux d'humidité final permettant de préserver un potentiel fermentescible le plus proche possible du potentiel fermentescible du substrat frais.

Si le taux d'humidité déterminé HM est similaire au taux d'humidité prédéterminé HD, soit HM=HD, aucune action est faite, le substrat 2 est stocké tel quel dans un organe de stockage 10. Dans tous les cas, les conditions de stockage sont adaptées pour maintenir le taux d'humidité (HM) du substrat à une valeur égale, à plus ou moins 5%, au taux d'humidité prédéterminé ((HD), ceci afin de tenir compte des contraintes de l'application du procédé à l'échelle industrielle et de limiter les variations du taux d'humidité (HM). En variante, le substrat 2 n'est pas stocké mais utilisé directement, étant entendu que cela signifie une utilisation dans les sept jours suivants sa collecte 1.

Si le taux d'humidité déterminé HM est inférieur au taux d'humidité prédéterminé HD, soit HM< HD, le substrat 2 est stocké tel quel, sachant qu'il sera toujours réhydraté 11 préalablement à son utilisation dans un procédé de fermentation 7. Comme précédemment, le substrat 2 peut être utilisé directement, après réhydratation 11. La réhydratation peut être directe ou indirecte lorsqu'on mélange le substrat déshydraté avec un substrat non déshydraté.

Lorsque l'on doit abaisser le taux d'humidité déterminé HM, c'est-à-dire lorsque HM>HD, ce qui est généralement le cas compte tenu de la composition des substrats 2 couramment rencontrés, on effectue une déshydratation 9 de manière contrôlée du substrat 2. Les techniques utilisées sont connues en soi et choisies selon la nature du substrat 2 et/ou le taux de matière sèche à atteindre. Pour mémoire, on peut utiliser un séchage à l'air, avec une ventilation naturelle ou une ventilation forcée. Cette dernière technique s'accompagne généralement, et de manière naturelle, d'un égouttage 5. On peut également effectuer la déshydratation par un égouttage 5 forcé, c'est-à-dire par un pressage mécanique. Il est à noter que l'égouttage 5 peut être effectué avant la première étape a) de détermination du taux d'humidité HM si on sait que, de par sa composition, le substrat 2 collecté a un taux d'humidité HM supérieur au taux d'humidité prédéterminé HD.

La déshydratation 9 est, avantageusement, réalisée par chauffage. Elle peut être réalisée, de façon continue ou discontinue, dans une cellule de séchage telle que celle utilisée dans l'industrie du bois, pour le foin ou les céréales. La déshydratation 9 peut être, si besoin, totale, par des techniques connues, par exemple par des techniques telles que la lyophilisation, c'est-à-dire une sublimation sous pression, ou la pervaporation par passage du substrat sur une membrane hydrophile.

Dans tous les cas, il est nécessaire de réhydrater 11, directement ou indirectement, un substrat ayant un taux d'humidité HM égal, ou du moins voisin, au taux d'humidité prédéterminé HD avant son utilisation dans un procédé de fermentation dont le taux d'humidité est connu en soi et, généralement, supérieur à 40%.

L'eau extraite du substrat peut, si besoin, être stockée 12 pour une éventuelle réhydratation du substrat ou utilisée pour des besoins agricoles et/ou industriels tels que des procédés de fermentation, de l'irrigation ou la culture de microorganismes. En variante, l'eau peut être soit retraitée en station de traitement des eaux usées soit évacuée sous forme de vapeur dans l'atmosphère lorsque la déshydratation 9 est faite par apport de chaleur.

Lorsque l'on utilise, dans un mode de réalisation avantageux, une source de chaleur pour fournir les calories nécessaires à la déshydratation 9, on utilise avantageusement une source de chaleur liée à un procédé lié à une fermentation. En particulier, une partie de la chaleur issue d'un procédé de cogénération ou de combustion du méthane est utilisée comme une source de chaleur servant à déshydrater le substrat 2. En d'autres termes, on utilise une partie de la chaleur excédentaire ou fatale produite lors du procédé de fermentation pour déshydrater le substrat.

Le stockage du substrat 2, réalisé de manière avantageuse en milieu sec et ventilé, induit une détermination régulière, par exemple par prise d'échantillons, du taux d'humidité HM. En effet, non seulement il convient d'éviter toute réhydratation 11 non maitrisée du substrat susceptible d'induire une diminution du potentiel fermentescible, par l'apparition d'une fermentation du substrat stocké, mais également toute dessiccation élevée, non voulue, du substrat. On conçoit que, si besoin, on effectue des mesures et des comparaisons du potentiel méthanogène du substrat en cours de stockage et/ou lors de la collecte du substrat. A titre d'exemple, on effectue à nouveau les diverses étapes du procédé, sur un échantillon de substrat, tous les mois sachant que la durée de stockage peut être d'au moins un an, comme illustré par les essais réalisés par la demanderesse. De fait, la durée de stockage est adaptée en fonction des besoins en substrat et peut donc être supérieure à un an.

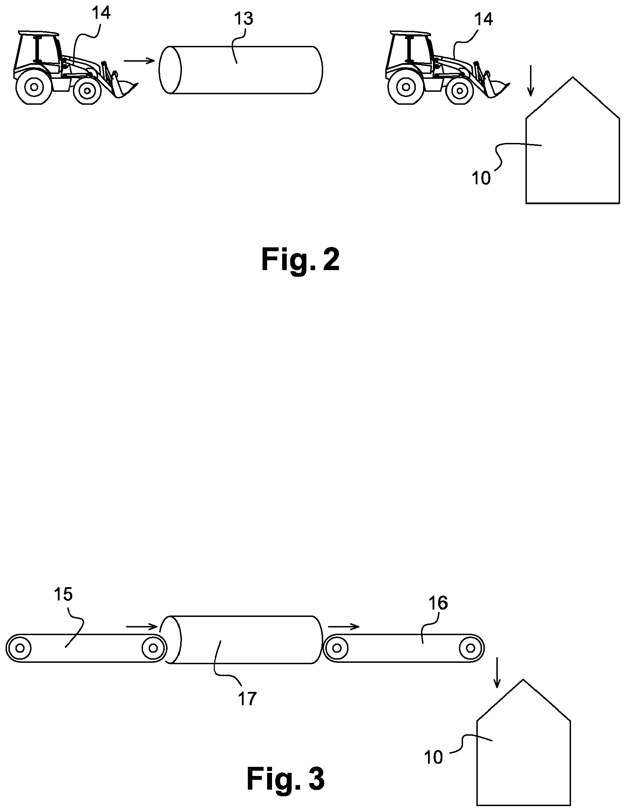

Deux types d'installations de mise en oeuvre du procédé objet de l'invention sont maintenant décrits en référence aux figures 2 et 3.

Dans tous les cas, on utilise des organes de déshydratation connus en soi et avantageusement utilisés dans le domaine agricole, forestier ou agro-alimentaire. De ce fait, ces organes ne seront pas décrits plus en détail, cela de façon similaire aux dispositifs d'échantillonnage et de mesure de l'humidité relative qui sont également connus en soi.

Dans un premier mode de réalisation illustré à la figure 2, l'installation permet de déshydrater 9 en discontinu un substrat 2. Avec une telle installation, l'alimentation et/ou la sortie du substrat d'un organe de déshydratation 13 est discontinue. Une telle installation, aisée à mettre en oeuvre, est particulièrement adaptée pour préparer le stockage de quantités de substrat comprises, par exemple, entre 500T et 10 000T, typiquement pour du substrat 2 excédentaire non utilisé immédiatement.

L'organe de déshydratation 13 est, par exemple, un séchoir de type rotatif comme un séchoir à foin. Des calories sont apportées dans ce séchoir, à partir d'une source de chaleur connue en soi, de l'eau et des calories sont extraites du séchoir. Le chargement et le déchargement du séchoir s'effectue de manière connue, par exemple les organes d'amenée et d'évacuation du substrat 2 sont formés par un engin agricole 14 équipé d'un godet de chargement. Typiquement, un tel séchoir permet d'abaisser en dessous de 40% le taux d'humidité de 50 T à 1000 T de substrat 2, en quelques jours, à savoir en moins de 8 jours. Le stockage est effectué dans un local 10, avantageusement ventilé, formant un organe de stockage. Dans d'autres modes de réalisation, la déshydratation 9 est faite naturellement ou par une autre technique connue.

Dans l'installation illustrée à la figure 3, les organes d'amenée et d'évacuation du substrat 2 comprennent chacun, respectivement, un tapis de convoyage 15, 16 qui amène et évacue en continu le substrat 2. Ce dernier est déshydraté dans un organe de déshydratation, avantageusement un organe de déshydratation en continu à contrecourant 17.

On conçoit que le tapis de convoyage 16 amène directement le substrat 2 déshydraté dans un local de stockage 10, hors d'eau. Des capteurs automatiques, non illustrés, de l'hygrométrie du local de stockage 10 peuvent avantageusement être programmés pour effectuer des mesures régulières du taux d'humidité. Ainsi, on peut vérifier, indirectement, la stabilité du taux d'humidité HM du substrat 2. Si le taux d'hygrométrie du local de stockage 10 fermé augmente, cela indique une réhydratation probable du substrat stocké. De même, il est possible de prévoir des capteurs dans le local de stockage 10 permettant de vérifier que le substrat stocké ne fermente pas mais reste stable et déshydraté. Pour cela, on peut utiliser, par exemple, des capteurs de méthane et/ou une sonde de température. On peut également utiliser des capteurs de dioxyde de carbone et/ou d'humidité.

Dans un mode de réalisation non illustré, le substrat déshydraté est emballé sous un film plastique opaque et étanche, de façon similaire au film utilisé pour réaliser l'ensilage. Dans ce cas, le stockage du substrat peut se faire dans un local ouvert, typiquement sous un hangar.

Outre une optimisation de la production de métabolites par une maitrise de la quantité et de la qualité du substrat, le fait d'avoir un taux d'humidité constant et contrôlé du substrat permet de préserver la quantité de métabolites produits. A titre d'exemple, on a observé une production de métabolites multipliée par 3,5 à 5 avec du substrat traité par rapport à du substrat non traité et stocké respectivement entre 3 et 12 mois soit des taux de préservation du potentiel fermentescible d'un substrat traité, stocké après 3 et 12 mois, supérieur à 70% de celui d'un substrat frais.

## Revendications

1. Procédé de préservation dans le temps du potentiel fermentescible initial de biomasse issue de co-produits de l'activité humaine, comportant une phase solide avec de l'eau formant une phase liquide, utilisée comme substrat organique dans une production de métabolites par fermentation, ledit potentiel étant représenté par le potentiel méthanogène de la biomasse, ou BMP, de la biomasse, comportant des étapes consistant à
a) déterminer le taux d'humidité (HM) de la biomasse (2) collectée (1),
**caractérisé en ce qu'**il comprend au moins les étapes suivantes :
- b) comparer (8) le taux d'humidité déterminé (HM) à un taux d'humidité prédéterminé (HD) et compris entre 8% et 12%,
- c) amener par déshydratation thermique, ou chauffage, à 60°C le taux d'humidité déterminé (HM) à une valeur correspondant au taux d'humidité prédéterminé (HD) lorsque le taux d'humidité déterminé (HM) est supérieur au taux d'humidité prédéterminé (HD),
- d) stocker seulement la biomasse (2) dont le taux d'humidité (HM), déterminé à l'étape a) ou obtenu à l'issue de l'étape c), correspond au taux d'humidité prédéterminé (HD).

2. Procédé selon la revendication 1, **caractérisé en ce qu'**on effectue, lors des étapes a) et d) des mesures du potentiel méthanogène de la biomasse.

3. Procédé selon l'une des revendications précédentes, **caractérisé en ce qu'**on adapte les conditions de stockage pour maintenir le taux d'humidité (HM) du substrat organique (2) collecté (1) à une valeur égale, à plus ou moins 5%, à celle du taux d'humidité prédéterminé (HD).

4. Procédé selon la revendication 1, **caractérisé en ce que**, lors de l'étape d), en cours de stockage, on effectue, par exemple régulièrement, les étapes a) et b).

5. Procédé selon l'une des revendications précédentes, **caractérisé en ce que**, avant l'étape a), on effectue un égouttage (5) du substrat organique (2) lors d'une étape supplémentaire e).

6. Procédé selon l'une des revendications précédentes, **caractérisé en ce que**, lors de l'étape a), la détermination du taux d'humidité (HM) est réalisée par une mesure effectuée sur un échantillon (6) représentatif du substrat organique (2) collecté.

7. Procédé selon l'une des revendications 1 à 5, **caractérisé en ce que**, lors de l'étape a), la détermination du taux d'humidité (HM) est réalisée visuellement sur le substrat organique (2) collecté.

## Patentansprüche

1. Verfahren zur Langzeitbewahrung des anfänglichen fermentierbaren Potenzials von Biomasse, die aus Nebenprodukten menschlicher Aktivität hervorgeht, das eine feste Phase mit Wasser umfasst, die eine flüssige Phase bildet und als organisches Substrat bei einer Produktion von Metaboliten durch Fermentation verwendet wird, wobei das Potenzial durch das methanogene Potenzial der Biomasse oder BMP der Biomasse dargestellt wird, das die Schritte umfasst, die bestehen aus
a) Bestimmen des Feuchtigkeitsgehalts (HM) der gesammelten (1) Biomasse (2), **dadurch gekennzeichnet, dass** es mindestens die folgenden Schritte umfasst:
- b) Vergleichen (8) des bestimmten Feuchtigkeitsgehalts (HM) mit einem vorbestimmten Feuchtigkeitsgehalt (HD) und der zwischen 8 % und 12 % liegt,
- c) Bringen des bestimmten Feuchtigkeitsgehalts (HM) durch thermische Dehydratierung oder Erhitzen auf 60 °C auf einen Wert, der dem vorbestimmten Feuchtigkeitsgehalt (HD) entspricht, wenn der bestimmte Feuchtigkeitsgehalt (HM) größer als der vorbestimmte Feuchtigkeitsgehalt (HD) ist,
- d) Lagern nur der Biomasse (2), deren Feuchtigkeitsgehalt (HM), der bei Schritt a) bestimmt wird oder am Ende des Schritts c) erhalten wird, dem vorbestimmten Feuchtigkeitsgehalt (HD) entspricht.

2. Verfahren nach Anspruch 1, **dadurch gekennzeichnet, dass** während der Schritte a) und d) Messungen des methanogenen Potenzials der Biomasse durchgeführt werden.

3. Verfahren nach einem der vorstehenden Ansprüche, **dadurch gekennzeichnet, dass** die Lagerbedingungen angepasst werden, um den Feuchtigkeitsgehalt (HM) des gesammelten (1) organischen Substrats (2) auf einem Wert zu halten, der auf 5 % mehr oder weniger gleich dem vorbestimmten Feuchtigkeitsgehalt (HD) ist.

4. Verfahren nach Anspruch 1, **dadurch gekennzeichnet, dass** bei Schritt d) während der Lagerung die Schritte a) und b) beispielsweise regelmäßig durchgeführt werden.

5. Verfahren nach einem der vorstehenden Ansprüche, **dadurch gekennzeichnet, dass** vor Schritt a) ein Abtropfen (5) des organischen Substrats (2) bei einem zusätzlichen Schritt e) durchgeführt wird.

6. Verfahren nach einem der vorstehenden Ansprüche, **dadurch gekennzeichnet, dass** bei Schritt a) die Bestimmung des Feuchtigkeitsgehalts (HM) durch eine Messung durchgeführt wird, die auf einer Probe (6), die für das gesammelte organische Substrat (2) repräsentativ ist, durchgeführt wird.

7. Verfahren nach einem der Ansprüche 1 bis 5, **dadurch gekennzeichnet, dass** bei Schritt a) die Bestimmung des Feuchtigkeitsgehalts (HM) visuell auf dem gesammelten organischen Substrat (2) erfolgt.

## Claims

1. Method for preserving over time the initial fermentable potential of biomass from byproducts of human activity, comprising a solid phase with water forming a liquid phase, used as an organic substrate in the production of metabolites by fermentation, said potential being represented by the biochemical methane potential (BMP) of the biomass, consisting of steps that allow:
a) determining the moisture content (HM) of the biomass (2) collected (1), **characterized in that** it comprises at least the following steps:
- b) comparing (8) the determined moisture content (HM) to a predetermined moisture content (HD) that lies between 8% and 12%,
- c) bringing, by thermal dehydration or heating at 60°C, the determined moisture content (HM) to a value corresponding to a predetermined moisture content (HD) when the determined moisture content (HM) is higher than a predetermined moisture content (HD),
- d) storing only the biomass (2) that has a moisture content (HM), as determined in step a) or obtained as a result of step c), corresponding to the predetermined moisture content (HD).

2. Method according to claim 1, **characterized in that** the biochemical methane potential of the biomass is measured in steps a) and d).

3. Method according to one of the preceding claims, **characterized in that** the storing conditions are adapted to maintain a moisture content (HM) of the organic substrate (2) collected (1) at a value equal to that of the predetermined moisture content (HD) ± 5%.

4. Method according to claim 1, **characterized in that** steps a) and b) are performed regularly during step d), during storage.

5. Method according to one of the preceding claims, **characterized in that**, before step a), the organic substrate (2) is drained (5) during an additional step e).

6. Method according to one of the preceding claims, **characterized in that**, during step a) the moisture content (HM) is measured on a representative sample (6) of the organic substrate (2) collected.

7. Method according to one of claims 1 to 5, **characterized in that**, during step a), the moisture content (HM) is determined visually for the organic substrate (2) collected.
